# EUROPÄISCHE PATENTANMELDUNG

(11) **EP 1 209 673 A1**
(43) Veröffentlichungstag der Anmeldung: **29.05.2002**
(21) Anmeldenummer: 02001726.5
(22) Anmeldetag: 06.03.2000
(51) Int. Cl.: G11B 7/24

(54) **Aufzeichnungsschicht für optischen Datenspeicher**

(30) Priorität: 05.03.1999 CH 41699
(62) Teilanmeldung aus: 00906124.3
(71) Anmelder: Vivastar Materials AG, 6330 Cham (CH)
(72) Erfinder: Zafirov, Atanas, 6301 Zug (CH)
(74) Vertreter: Frei, Alexandra Sarah

(57) **Zusammenfassung**

Die vorliegende Erfindung betrifft Aufzeichnungsschichten von optischen Datenspeichern, welche Aufzeichnungsschichten Farbstoffe und mindestens einen Stabilisator enthalten. Der mindestens eine Stabilisator ist ein Aminoderivat, ein Phenolderivat, ein Phosphorigsäureester, ein Thio(Dipropionsäureester), ein Blei-, Kalzium-, Zink- oder Kadmiumsalz oder eine Organozinnverbindung. Der mindestens eine Stabilisator liegt in den Aufzeichnungsschichten in Mengen von 0.1 - 70 % bezogen auf das Gewicht der Farbstoffe vor. Durch den mindestens einen Stabilisator wird eine allgemeine Erhöhung der Haltbarkeit der optischen Datenspeicher sowie eine Erhöhung der Gleichmässigkeit und Homogenität der Aufzeichnungsschichten erreicht.

## Beschreibung

Die vorliegende Erfindung liegt auf dem Gebiete der optischen Datenspeicher und betrifft Aufzeichnungsschichten für optische Datenspeicher nach dem Oberbegriff des ersten unabhängigen Patentanspruchs.

Optische Datenspeicher wie bspw. CD-Recordables sind scheibenförmig, sie werden mit Lasern ein- und/oder ausgelesen und drehen sich hierzu mit hoher Geschwindigkeit um ihre Achse, Solche optische Datenspeicher sind normiert und bestehen aus einem Polycarbonat-Träger, der auf seiner Oberseite eine metallische Reflexionsschicht und eine Aufzeichnungsschicht aufweist, wobei die Aufzeichnungsschicht zwischen Polycarbonat-Träger und metallischer Reflexionsschicht angeordnet ist.

Als metallische Reflexionsschichten werden in der Regel Silber- oder Goldschichten verwendet.

Die Aufzeichnungsschichten enthalten mindestens einen Farbstoff und gegebenenfalls einen Quencher. Bekannte Farbstoffe für Aufzeichnungsschichten sind Cyaninfarbstoffe (Methin- und Polymethinfarbstoffe), Phthalocyaninfarbstoffe, Formazanfarbstoffe oder Azofarbstoffe. Heutzutage werden insbesondere Polymethinfarbstoffe mit 3, 5 und mehr Methingruppen verwendet. Diese Farbstoffe sind kationisch und enthalten anorganische Anionen (z.B. Cl⁻, Br⁻, ClO₄⁻ oder BF₄⁻) oder organische Anionen (z.B. Anionen von Sulfo- oder Karboxysäuren).

Ein erster Nachteil bekannter optischer Datenspeicher besteht in der oft unzureichenden Lichtbeständigkeit der Aufzeichnungsschichten.

Weitere Nachteile folgen aus den vielfach nicht zureichenden rheologischen Eigenschaften (insbesondere durch Viskosität und Oberflächenspannung bestimmt) und aus dem oft lange dauernden Trocknen der Lösungen, die die Farbstoffe für die Aufzeichnungsschicht enthalten und die für die Herstellung der Aufzeichnungsschichten auf den Polycarbonat-Trägern aufzubringen sind. Folgen davon sind ungleichmässige Aufzeichnungsschichten, ungleichmässig mit Farbstoff aufgefüllte Aufzeichnungsrillen und lange Zykluszeiten.

Ein weiterer Nachteil entsteht aus der Verwendung von Gold oder Silber als metallische Reflexionsschichten, die die Herstellung der optischen Datenspeicher teuer macht.

Aufgabe der vorliegenden Erfindung ist die Behebung der genannten Nachteile. Insbesondere soll die Erfindung hochstabile Aufzeichnungsschichten für optische Datenspeicher aufzeigen, die sehr lichtbeständig sind und sehr lange haltbare optische Datenspeicher ergeben. Die Aufzeichnungsschichten sollen sich zudem durch hohe Gleichmässigkeit und Homogenität auszeichnen und die Datenspeicher sollen möglichst billig herzustellen sein. Datenspeicher mit den erfindungsgemässen Aufzeichnungsschichten und Verfahren zu deren Herstellung sollen mit bestehenden Industriestandards kompatibel sein.

Diese Aufgabe wird durch die in den Patentansprüchen definierte Erfindung gelöst.

Gemäss Erfindung wird die Haltbarkeit von optischen Datenspeichern erhöht, indem den Aufzeichnungsschichten und gegebenenfalls auch den Trägern ein Stabilisator oder ein Gemisch verschiedener Stabilisatoren zugegeben wird.

Als Stabilisatoren für die hochstabilen Aufzeichnungsschichten des erfindungsgemässen optischen Datenspeichers werden Aminoderivate, Phenolderivate, Phosphorigsäureester, Thio(Dipropionsäureester), Blei-, Kalzium-, Zink-, oder Kadmiumsalze oder Organozinnverbindungen eingesetzt oder auch Mischungen von verschiedenen der genannten Substanzgruppen. Das Gewicht des Stabilisators in der Aufzeichnungsschicht beträgt zwischen 0.1 und 70 % des Farbstoffgewichtes. Die Aufzeichnungsschicht kann auch Stabilisatorgemische mit mehreren dieser Stabilisatorkomponenten aufweisen. Die Stabilisatorkomponenten lassen sich in beliebigen Verhältnissen mischen, um so vorteilhafte synergetischen Wirkungen zu erzielen.

Vorteilhafte Aminoderivate sind: N-Phenyl-β-naphthylamin, N-Phenyl-α-naphthylamin, p-Hydroxyphenyl-β-naphthylamin, P-Phenylendiamin, Diphenylamin, N,N'-Diphenyl-p-phenylendiamin, N,N'-Di-β-naphthyl-p-phenylendiamin, Nitrosodiphenylamin, p-Nitrosodiphenylamin, 4-Aminodiphenylamin, 2-(2'-Hydroxy-5"methylphenyl)benztriazol, 4,4'-Diaminodizyklohexylmethan, N-Phenyl-N'zyklohexyl-p-phenylendiamin, 4,4'-Dialkyldiphenylamin, 4,4'-Di-(1,1,3,3-tetramethylbutyl)diphenylamin, 4,4'-Di(α-methylbenzyl)diphenylamin, 4,4'-Bis(α,α-dimethylbenzyl) diphenylamin, 4,4'-Diamin-diphenylmethan, Aldol-α-naphthylamin, Polymer des 2,2,4-Trimethyl-1,2-dihydro-chinolins und des 2,2,4-Trimethyl-6-äthoxy-1,2-dihydrochinolins, Kondensationsprodukte des Diphenylamins mit Azeton, Dialkyldithiokarbamate verschiedener Metalle, substituierte Thiokarbamate und 2-Merkaptobenzimidazol.

Vorteilhafte Phenolderivate sind: 2,6-Di-tert.-butylphenol; 2,6-Di-tert.-butyl-4-methylphenol; 2-tert.-butyl-4-methylphenol; 6-tert.-butyl-3-methylphenol; α-Methylbenzylphenole; 2,6-Di-tert.-butyl-4-methoxyphenol; 4-Hydroxy-3,5-di-tert.butylbenzylalkohol; 6-tert.-butyl-2-methylphenol; Ester der β-(4-Hydroxy-3,5-ditert.-butylphenyl)propionsäure; 2,5-Di-tert.-butylhydrochinon; 2,5-Di-tert.amylhydrochinon; 2,2'-Methylenbis(6-tert.-butyl-4-methylphenol); 2,2'-Methylenbis(6-tert.-butyl-4-äthylphenol); 2,2'-Methylenbis(4,6-dimethylphenol); 2,2'-Isobutylidenbis(4,6-dimethylphenol); 2,2'-Methylenbis (4-methyl-6-α-zyklohexylphenol); 4,4'-Methylenbis(2,6-di-tert.-butylphenol); 4,4'-Butylidenbis(6-tert.-butyl-3-methylphenol); 2,2'-Thiobis(6-tert.-butyl-4-methylphenol); 2,2'-Thiobis (4-methyl-6-a-methylbenzylphenol); 2,2'-Thio-bis (4,6-di-sek.-amylphenol); 4,4'-Thiobis(6-tert.-butyl-2-methylphenol); 4,4'-Thio-bis (6-tert.-butyl-3-methylphenol); Bis(4-hydroxy-3,5-di-tert.-butylbenzyl)sulfid; 1,1,3-Tris(5'-tert.butyl-4' -hydroxy-2' -methylphenyl)butan; 2,4,6-Tris(4'-hydroxy-3',5'-di-tert.butylbenzyl)mesitylen; Pentaerythrit-Ester der 4-Hydroxy-3,5-di-tert.butylpropionsäure; 2,4-Dihydroxybenzophenon; 4-Alkoxy-2-hydroxybenzophenon und 2-Hydroxy-4-methoxybenzophenon.

Vorteilhafte Phosphorigsäureester sind: Tri-n-oktylphosphit; Tri(2-äthylhexyl)phosphit; Triphenylphosphit; Tri(n-nonylphenyl)phosphit und Tri(α-methylbenzylphenyl) phosphit.

Vorteilhafte Thio(Dipropionsäureester) sind: Thio(dilaurylpropionat); Thio(distearylpropionat), Thio(dimyristilpropionat).

Vorteilhafte Metallsalze sind: zweibasisches Bleistearat; zweibasisches Bleiphthalat; Kalziumstearat, Zinkstearat und Kadmiumstearat.

Vorteilhafte Organozinnverbindungen sind: Zinn-dialkylkarboxylate wie Zinn-di-nbutyl-laurinat; Zinn-di-n-butyl-maleinat; Produkt der Reaktion zwischen Di-butyl-Zinnoxyd mit 3,3-Bis(4-hydroxy-3',5'-di-tert.-butylphenyl) der Ölsäure und Produkt der Reaktion zwischen Di-butyl-Zinnoxyd mit Dodezylmerkaptan.

Durch den Stabilisator oder das Stabilisatorgemisch wird die Lichtbeständigkeit der Aufzeichnungsschicht erhöht, wird die Beständigkeit des Systems bestehend aus Aufzeichnungsschicht, Reflexionsschicht und Träger erhöht und werden zusätzlich zur Beständigkeit auch die rheologischen Eigenschaften der für die Herstellung der Aufzeichnungsschicht verwendeten Lösung der Aufzeichnungsschichtsubstanzen verbessert. Die verbesserten rheologischen Eigenschaften führen zu gleichmässigen und sehr homogenen Aufzeichnungsschichten, die dadurch dünner sein können und dadurch schneller getrocknet werden können.

Die erhöhte Stabilität verhindert oder verlangsamt auch Korrosionseffekte, die an der Grenzfläche zwischen Reflexionsschicht und Aufzeichnungsschicht beginnen und sich dann im ganzen optischen Datenspeicher ausweiten. Durch die Reduktion der Korrosion wird es möglich für die Aufzeichnungsschichten unedlere und auch wesentlich billigere Metalle als Gold oder Silber, beispielsweise Aluminium zu verwenden.

Das Polycarbonat, aus dem der Träger hergestellt ist, enthält Feuchtigkeit und Sauerstoff, die in die Aufzeichnungsschicht gelangen und auf diese eine nachteilige Wirkung haben können. Um dies zu vermeiden, lässt sich der Polycarbonat-Träger und damit der ganze optische Datenspeicher mit Trinonylphenylphosphit gegen die Absonderung von Feuchtigkeit und Sauerstoff stabilisieren. Vorteilhafterweise ist das Trinonylphenylphosphit im Polycarbonat-Träger inkorporiert. Dies hat eine direkte Erhöhung der Haltbarkeit des optischen Datenspeichers zur Folge.

### Beispiel:

Eine beispielhafte Aufzeichnungsschicht enthält einen Polymethinfarbstoff mit 5 Methingruppen, einen handelsüblichen Quencher und als Stabilisator 0,1 bis 60% (auf das Farbstoffgewicht bezogen) von 4,4'-Thiobis(6-tert.-butyl-m-kresol), eine Menge im gleichen Bereich von polymerem 1,2-Dihydro-2,2,4-trimethylchinolin oder 0,1 bis 40% Diphenylguanidin.

Die für die Herstellung der Aufzeichnungsschicht verwendete Lösung wird hergestellt, indem zu einem Gemisch von Diazetonalkohol und 2-Methoxyethanol (7: 4) unter ständigem Rühren ein handelsüblicher Farbstoff, ein handelsüblicher Quencher und der Stabilisator zugegeben werden in einer Menge derart, dass eine ca. 3%ige Lösung entsteht. Dann wird ca. 24 Stunden weiter gerührt. Anschliessend wird die Lösung mit Hilfe von Stickstoff oder Pressluft durch ein Sartorius 116-Filter unter Druck gefiltert.

Auch Mischungen von Ethoxyethanol, Butanol oder Isopropanol mit Diazetonalkohol eignen sich als Lösungsmittel.

Die filtrierte Lösung wird durch Zentrifugieren auf einen bspw. mit einer spiralförmigen Rille versehenen Polycarbonat-Träger aufgetragen. Anschließend wird der Träger mit der aufgetragenen Lösung während 5 bis 30 Minuten bei 80°C getempert.

Auf die getemperte Aufzeichnungsschicht wird durch Sputtern eine Reflexionschicht aus Metall (Gold, Silber oder Aluminium) aufgetragen, die eine Dicke von 60 bis 100 nm hat. Auf die Reflexionsschicht wird durch Zentrifugieren eine Schutzschicht aus UV-härtendem Lack mit einer Dicke von ca. 6 µm aufgetragen. Der optische Datenspeicher ist nach dem Aushärten des Lackes fertiggestellt.

Für Testzwecke werden auf optische Datenspeicher mit Hilfe eines Laserrecorders Testinformationen aufgenommen und die beschriebenen Datenspeicher werden mit Hilfe eines kalibrierten CD-CATS-Messgeräts ausgemessen. Derart beschriebene und vermessene Testspeicher werden für 72 Stunden in einer Klimakammer bei 80°C und einer relativen Feuchtigkeit von 85% gealtert und nach der Alterung wiederum ausgemessen. Die durch die Alterung bewirkten prozentualen Änderungen der BLER- und Jitter-Werte sind ein Mass für die Stabilität der optischen Datenspeicher (siehe folgende Tabelle) Die Tabelle zeigt die Wirkung von verschiedenen Stabilisatoren und Stabilisatorgemischen auf die prozentuale Veränderung von BLER-Werten (block error rate) und Jitter-Werten durch einen Alterungstest (Vergleich: ohne Stabilisator)

| Beispiel | Stabilisator | Verhältnis Stablisator/Farbstoff [Gew. %] | Änderung durch Alterung in Klimakammer [%] | |
|---|---|---|---|---|
| | | | BLER | Jitter |
| | Ohne Stabilisator | 0 | ca. 30 | ca. 24 |
| 1 | Polymer des 2,2,4-Trimethyl-1,2-dihydro chinolins | 30 50 | ca. 13 ca. 11 | ca. 11 ca. 10 |
| 2 | 4-Aminodiphenylamin | 50 | ca. 9 | ca. 7 |
| 3 | 2,2'-Methylenbis(6-tert.- butyl-4-methylphenol) | 30 50 | ca. 12 ca. 10 | ca. 10 ca. 9 |
| 4 | 4,4'-Thio-bis(6-tert.-butyl- 3-methylphenol) | 20 50 | ca. 14 ca. 11 | ca. 12 ca. 10 |
| 5 | Triphenylphosphit | 50 | ca. 12 | ca. 10 |
| 6 | Thio(dilaurylpropionat) | 50 | ca. 10 | ca. 8 |
| 7 | Kadmiumstearat | 50 | ca. 11 | ca. 8 |
| 8 | Zinn-di-n-butyl-maleinat | 50 | ca. 12 | ca. 9 |
| 9 | 4-Aminodiphenylamin + | 30 | ca. 7 | ca. 5 |
| | 2-Tert.-butyl-4-methylphenol | 20 | | |
| 10 | 4-Aminodiphenylamin + | 20 | | |
| | 2,6-Di-tert.-butyl-4-methyl- | 10 | | |
| | phenol + | | ca. 5 | ca. 4 |
| | 2,2'-Thio-bis(4,6-di-sek.- | 10 | | |
| | amylphenol) + | | | |
| | Tri(2-äthylhexyl)phosphit | 10 | | |

Die vorliegende Erfindung ist mit allen bekannten Industriestandards kompatibel. Sie lässt sich in der Herstellung von optischen Datenspeichern, wie beispielsweise CD-Recordables, DVD-Recordables, DVD-RAM, DVD-RW und HD einsetzen.

## Patentansprüche

1. Aufzeichnungsschicht in einem optischen Datenspeicher, die mindestens einen Farbstoff enthält, **dadurch gekennzeichnet, dass** die Aufzeichnungsschicht zusätzlich als Stabilisator mindestens ein
Blei-, Kalzi-
um-, Zink-, oder Kadmiumsalz enthält.

2. Aufzeichnungsschicht nach Anspruch 1, **dadurch gekennzeichnet, dass** das Gewicht des Stabilisators in der Aufzeichnungsschicht 0,1 - 70% des Farbstoffgewichtes ist.

3. Aufzeichnungsschicht gemäss Anspruch 1 oder 2, **dadurch gekennzeichnet, dass** der mindestens eine Farbstoff ein Cyaninfarbstoff, ein Phthalocyaninfarbstoffe, ein Formazanfarbstoff oder ein Azofarbstoff ist oder eine Kombinationen von mehreren Farbstoffen der genannten Farbstoffgruppen.

4. Aufzeichnungsschicht gemäss Anspruch 1 oder 2, **dadurch gekennzeichnet, dass** der mindestens eine Farbstoff ein kationischer Polymethin- oder Cyaninfarbstoff mit 3, 5 oder mehr Methingruppen ist und als Anionen Cl⁻, Br⁻, ClO₄⁻, BF₄⁻ oder Anionen von Sulfonsäuren oder Karboxysäuren enthält.

5. Aufzeichnungsschicht gemäss einem der Ansprüche 1 bis 4, **dadurch gekennzeichnet, dass** sie als weiteren Stabilisator ein Aminoderivat oder ein Phenolderivat enthält.

6. Aufzeichnungsschicht gemäss Anspruch 5, **dadurch gekennzeichnet, dass** der weitere Stabilisator mindestens eines der folgenden Aminoderivate ist: N-Phenyl-β-naphthylamin, N-Phenyl-α-naphthylamin, p-Hydroxyphenyl-ß-naphthylamin, P-Phenylendiamin, Diphenylamin, N,N'-Diphenyl-p-phenylendiamin, N,N'-Di-β-naphthyl-p-phenylendiamin, Nitrosodiphenylamin, p-Nitrosodiphenylamin, 4-Aminodiphenylamin, 2-(2'-Hydroxy-5"-methylphenyl)benztriazol, 4,4'-Diaminodizyklohexylmethan, N-Phenyl-N'-zyklohexyl-p-phenylendiamin, 4,4'-Dialkyldiphenylamin, 4,4'-Di-(1,1,3,3-tetramethylbutyl)diphenylamin, 4,4'-Di(α-methylbenzyl)diphenylamin, 4,4'-Bis(α,α-dimethylbenzyl)diphenylamin, 4,4'-Diamin-diphenylmethan, Aldol-a-naphthylamin, Polymer des 2,2,4-Trimethyl-1,2-dihydro-chinolins und des 2,2,4-Trimethyl-6-äthoxy-1,2-dihydrochinolins, Kondensationsprodukte des Diphenylamins mit Azeton, Dialkyldithiokarbamate verschiedener Metalle, substituierte Thiokarbamate und 2-Merkaptobenzimidazol.

7. Aufzeichnungsschicht gemäss Anspruch 5 oder 6, **dadurch gekennzeichnet, dass** der weitere Stabilisator mindestens eines der folgenden Phenolderivate ist: 2,6-Di-tert.-butylphenol; 2,6-Di-tert.-butyl-4-methylphenol; 2-tert.-butyl-4-methylphenol; 6-tert.-butyl-3-methylphenol; α-Methyl-benzylphenole; 2,6-Ditert.-butyl-4-methoxyphenol; 4-Hydroxy-3,5-di-tert.-butylbenzylalkohol; 6-tert.butyl-2-methylphenol; Ester der β-(4-Hydroxy-3,5-di-tert.butylphenyl)propionsäure; 2,5-Di-tert.-butylhydrochinon; 2,5-Di-tert.amylhydrochinon; 2,2'-Methylenbis(6-tert.-butyl-4-methylphenol); 2,2'-Methylenbis (6-tert.-butyl-4-äthylphenol); 2,2'-Methylenbis (4,6-dimethylphenol); 2,2' -Isobutylidenbis (4,6-dimethylphenol); 2,2' -Methylenbis (4-methyl-6-azyklohexylphenol); 4,4'-Methylenbis(2,6-di-tert.-butylphenol); 4,4'-Butylidenbis(6-tert.-butyl-3-methylphenol); 2,2'-Thiobis(6-tert.-butyl-4-methylphenol); 2,2'-Thiobis(4-methyl-6-α-methylbenzylphenol); 2,2'-Thiobis(4,6-di-sek.-amylphenol); 4,4'-Thiobis(6-tert.-butyl-2-methylphenol); 4,4'-Thio-bis(6-tert. -butyl-3-methylphenol); Bis (4-hydroxy-3,5-di-tert.butylbenzyl)sulfid; 1,1,3-Tris(5'-tert.-butyl-4'-hydroxy-2'-methylphenyl)butan; 2,4,6-Tris(4'-hydroxy-3',5'-di-tert.-butylbenzyl)mesitylen; Pentaerythrit-Ester der 4-Hydroxy-3,5-di-tert.-butylpropionsäure; 2,4-Dihydroxybenzophenon; 4-Alkoxy-2-hydroxybenzophenon und 2-Hydroxy-4-methoxybenzophenon.

8. Aufzeichnungsschicht gemäss einem der Ansprüche 1 bis 7, **dadurch gekennzeichnet, dass** sie als Stabilisator mindestens eines der folgenden Metallsalze enthält: zweibasisches Bleistearat; zweibasisches Bleiphthalat; Kalziumstearat, Zinkstearat und Kadmiumstearat.

9. Verwendung einer Aufzeichnungsschicht gemäss einem der Ansprüche 1 bis 8 zur Erhöhung der Beständigkeit eines optischen Datenspeichers.

10. Lösung zur Herstellung von Aufzeichnungsschichten nach einem der Ansprüche 1 bis 8, **dadurch gekennzeichnet, dass** sie den mindestens einen Farbstoff und den Stabilisator in eine Mischung von Diazetonalkohol und 2-Methoxyethanol gelöst enthält.

11. Verwendung der Lösung gemäss Anspruch 10 in der Herstellung von optischen Datenspeichern zur Erhöhung der Gleichmässigkeit und Homogenität der Aufzeichnungsschicht der Datenspeicher.

12. Optischer Datenspeicher mit einem Polycarbonat-Träger, einer metallischen Reflexionsschicht und einer Aufzeichnungsschicht gemäss einem der Ansprüche 1 bis 8 zwischen Träger und Reflexionsschicht.

13. Optischer Datenspeicher gemäss Anspruch 12, **dadurch gekennzeichnet, dass** er eine Reflexionsschicht aus Aluminium aufweist.

14. Optischer Datenspeicher gemäss einem der Ansprüche 12 oder 13, **dadurch gekennzeichnet, dass** der Polycarbonat-Träger zur Verhinderung oder Reduktion der Absonderung von Feuchtigkeit und Sauerstoff Trinonylphenylphosphit enthält.

15. Optischer Datenspeicher gemäss einem der Ansprüche 12 bis 14, **dadurch gekennzeichnet, dass** er ein CD-Recordable, ein DVD-Recordable, ein DVD-RAM, ein DVD-RW oder ein HD ist.
